# EUROPÄISCHE PATENTSCHRIFT

(11) **EP 1 666 736 B1**
(45) Veröffentlichungstag und Bekanntmachung des Hinweises auf die Patenterteilung: **25.06.2008**
(21) Anmeldenummer: 05022839.4
(22) Anmeldetag: 20.10.2005
(51) Int. Cl.: F16B 2/08

(54) **Halteclip für Kraftfahrzeugkarosserien**
Retaining clip for motor vehicle bodies
Attache de retenue pour carrosseries automobiles

(30) Priorität: 04.12.2004 DE 102004058615
(43) Veröffentlichungstag der Anmeldung: 07.06.2006
(73) Patentinhaber: Dr. Ing. h.c. F. Porsche Aktiengesellschaft, 71287 Weissach (DE)
(72) Erfinder: Schwarz, Markus, 71696 Moeglingen (DE); Pantke, Reinhard, 75378 Bad Liebenzell (DE)

(56) Entgegenhaltungen:
- EP-A- 1 496 270
- DE-A- 19 638 305
- DE-U1- 20 109 130
- DE-U1- 20 204 674
- GB-A- 2 356 491

## Beschreibung

Die Erfindung betrifft einen Halteclip, insbesondere für Kraftfahrzeugkarosserien, gemäß dem Oberbegriff des Patentanspruchs 1.

Aus der DE-0S 27 34 753 geht ein Halteclip hervor, wobei zuerst der Halteclip durch Einstecken des Fußabschnitts in eine Öffnung des Karosserieteils in eine Endmontageposition gebracht und danach ein festzulegendes Bauteil an einem Aufnahmeabschnitt des Halteclipses befestigt wird. Ein derartiger Halteclip ist anwendbar, wenn sowohl das Karosserieteil als auch das festzulegende Bauteil frei zugänglich sind.

Aus der gattungsbildenden DE 196 38 305 A1 ist ein Halteclip, insbesondere für Kraftfahrzeugkarosserien, bekannt, der einen Fußabschnitt und ein Kopfteil umfasst, wobei das Kopfteil einen Aufnahmeabschnitt für zumindest ein festzulegendes Bauteil aufweist und der Fußabschnitt in einer Endmontageposition in eine Öffnung eines Karosserieteils einsteckbar und daran befestigbar ist.

Der am festzulegenden Bauteil vormontierte Halteclip weist ein Zugelement auf, mittels dem der Halteclip von einer Vormontageposition (A) über Zwischenstellungen in eine Endmontageposition (B) verlagerbar ist, wobei das vom Fußabschnitt weggeführte Zugelement mit einer endseitigen Handhabe versehen ist.

Aufgabe der Erfindung ist es, einen Halteclip der eingangs genannten Gattung so weiterzubilden, dass nach erfolgter Endmontage des Halteclipses das Zugelement eine zusätzliche Funktion ausüben kann.

Erfindungsgemäß wird diese Aufgabe durch die Merkmale des Anspruchs 1 gelöst. Weitere die Erfindung in vorteilhafter Weise ausgestaltenden Merkmale sind in den Unteransprüchen enthalten.

Durch den erfindungsgemäßen Halteclip sind zwei Bauteile dauerhaft relativ zueinander positionierbar, die in der Endmontageposition nicht zugänglich sind. Durch die Anordnung eines Zugelementes am Halteclip ist der am festzulegenden Bauteil vormontierte Halteclip in eine Vormontageposition mit dem Karosserieteil bringbar und nach dem Befestigen des Karosserieteiles durch eine Zugbewegung des Zugelementes über Zwischenstellungen in die Endmontageposition verlagerbar. Das Zugelement ist vom Fußabschnitt weggeführt und weist zur einfacheren Betätigung an seinem freien Ende eine endseitige Handhabe auf.

Nach dem Einsetzen und Befestigen des beweglichen Karosserieteils am angrenzenden feststehenden Aufbau wird durch Ziehen des Zugbandes in Pfeilrichtung R der Halteclip über Zwischenstellungen in seine Endmontageposition gebracht. Nach erfolgter Endmontage des Halteclipses am Karosserieteil ist das Zugelement erfindungsgemäß als Kabelbinder nutzbar. Das Zugelement kann entweder am Halteclip verbleiben oder aber es kann vom Halteclip getrennt werden.

Zum besseren Hindurchführen der Handhabe durch die Öffnung des Karosserieteils kann die Handhabe mit einem zugespitzten Ende versehen sein. Damit sich in der Vormontageposition das Karosserieteil nicht vom Halteclip löst, kann benachbart der Handhabe am Zugelement eine Verliersicherung vorgesehen sein, die durch zwei V-förmig angeordnete federnde Haken gebildet wird. Die beiden Haken zeigen mit ihrer Spitze in Richtung der Handhabe.

Das Zugelement kann entlang seiner Längserstreckung mehrere mit Abstand zueinander angeordnete Rastelemente, dazwischenliegende zylindrische Verbindungsstege und zumindest eine schlüssellochartige Aussparung aufweisen. Nach der Endmontage wird das Zugelement als Kabelbinder genutzt, womit Abfall vermieden und das Zugelement einer sinnvollen Zweitverwendung zugeführt wird.

Ein Ausführungsbeispiel der Erfindung ist in den Zeichnungen dargestellt und wird im Folgenden näher erläutert.
Es zeigt
- Fig. 1: einen Vertikalschnitt durch eine Seitentüre einer Kraftfahrzeugkarosserie mit einem Türkörper, der zum Fahrgastraum hin durch ein Karosserieteil verschließbar ist, wobei innerhalb des Türhohlraumes ein festzulegendes Bauteil angeordnet ist,
- Fig. 2: eine Seitenansicht auf eine erste Ausführungsform eines Halteclipses,
- Fig. 3: eine Seitenansicht auf eine zweite Ausführungsform eines Halteclipses,
- Fig. 4a: einen Schnitt entsprechend Fig. 1, wobei das plattenförmige Karosserieteil in seiner Offenstellung dargestellt ist und der Halteclip am festzulegenden Bauteil vormontiert ist,
- Fig. 4b: einen Schnitt entsprechend Fig. 4a, wobei eine endseitige Handhabe des Halteclipses unverlierbar mit dem Karosserieteil verbunden ist (Vormontagestellung A)
- Fig. 4c: einen Schnitt entsprechend Fig. 4b, wobei das plattenförmige Karosserieteil seine Schließstellung aufweist,
- Fig. 4d: einen Schnitt entsprechend Fig. 4c, wobei durch Ziehen des Zugbandes der Halteclip in seine Endmontagestellung B bewegt wurde
- Fig. 5a: einen Schnitt entsprechend Fig. 4d, wobei der vorstehende Bereich des Zugbandes einen mit dem Halteclip verbundenen Kabelbinder bildet,
- Fig. 5b: einen Schnitt entsprechend Fig. 5a, wobei der vorstehende Bereich des Zugbandes vom Halteclip getrennt wurde und einen Kabelbinder bildet.

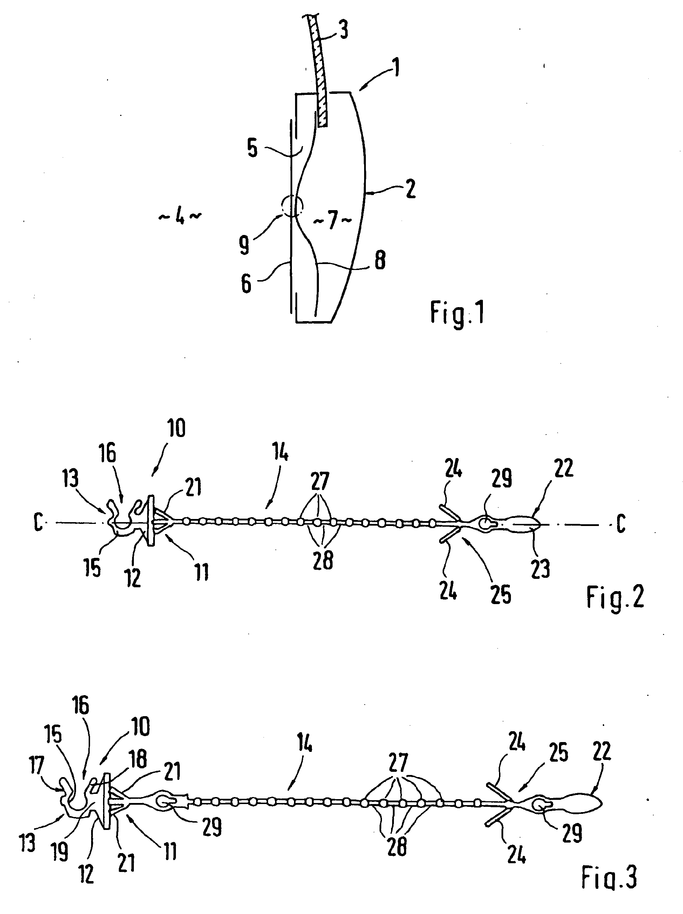

In Fig. 1 ist eine Seitentüre 1 einer Kraftfahrzeugkarosserie dargestellt, wobei die Seitentüre 1 einen Türkörper 2 und eine höhenverstellbare Türfensterscheibe 3 umfasst. Zu einem Fahrgastraum 4 hin weist der Türkörper 2 eine großflächige Ausnehmung 5 auf, die mittels eines plattenförmigen Karosserieteils 6 verschließbar ist.

Im Ausführungsbeispiel wird das Karosserieteil 6 durch ein Türinnenblech gebildet, das randseitig über nicht näher dargestellte lösbare Befestigungselemente mit dem Türkörper 2 verbindbar ist. Innerhalb eines Türhohlraumes 7 erstreckt sich ein Bauteil 8, das durch einen Bowdenzug, ein Kabel, einen Schlauch oder dgl. gebildet wird. Im Ausführungsbeispiel wird das Bauteil 8 durch einen Bowdenzug für einen Türfensterheber gebildet.

Ohne Festlegung würde sich das Bauteil 8 im Fahrbetrieb bewegen und örtlich in Kontakt mit der Innenseite des Karosserieteils 6 (Türinnenblech) gelangen, wodurch evtl. störende Geräusche verursacht werden könnten. Deshalb ist es erforderlich, das Bauteil 8 in einem Bereich 9 dauerhaft mit dem angrenzenden Bauteil zu verbinden (Fig. 1).

Die Problematik besteht darin, dass die Zugänglichkeit dieses Montageortes bei fertigmontiertem Türinnenblech nicht gewährleistet ist und dass das festzulegende Bauteil nicht so lange ist, dass es bei noch nicht montiertem Türinnenblech mit diesem verbindbar ist.

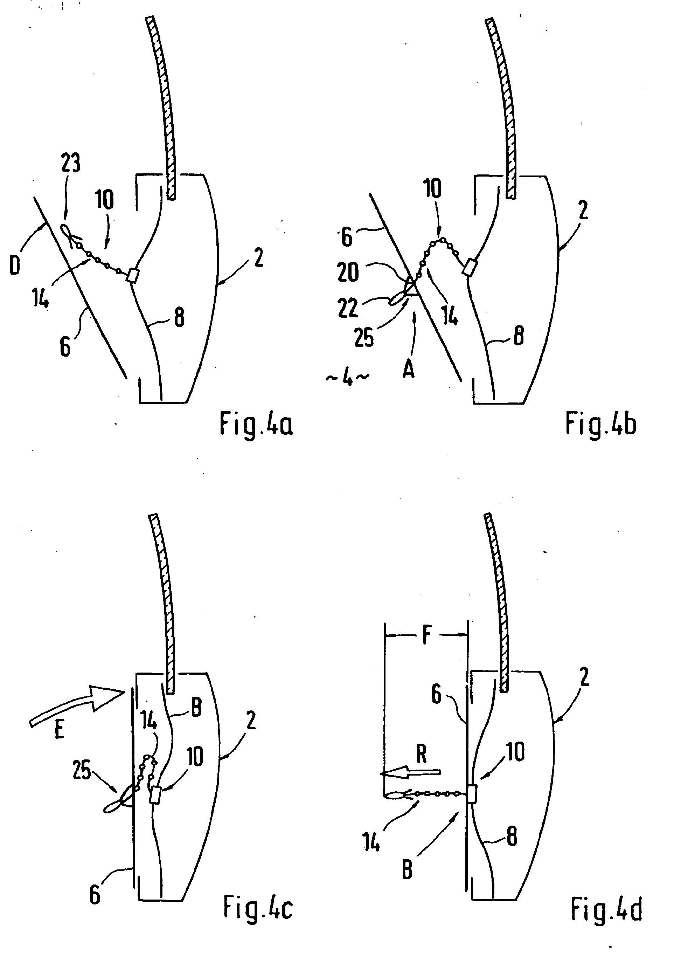

Gelöst wird dieses Problem durch einen speziellen Halteclip 10, der vorzugsweise aus Kunststoff gefertigt ist. Die Besonderheit des Halteclipses 10 besteht darin, dass er neben einem Fußabschnitt 11, einem Auflagekragen 12 und einem Kopfteil 13 zusätzlich ein Zugelement 14 aufweist, mittels dem der am festzulegenden Bauteil 8 vormontierte Halteclip 10 von einer Vormontageposition A (Fig. 4b) über Zwischenstellungen in eine Endmontageposition B (Fig. 4d) verlagerbar ist.

Das Kopfteil 13 zur Aufnahme des zumindest einen festzulegenden Bauteils 8 ist an einem freien Ende des Halteclipses 10 angeordnet und weist einen hinterschnittenen Aufnahmeabschnitt 15 auf, wobei der von zwei seitlichen Schenkel 17, 18 begrenzte Aufnahmeabschnitt 15 eine Zugangsöffnung 16 aufweist. Gemäß den Fig. 2 und 3 ist die Zugangsöffnung 16 etwa rechtwinkelig zu einer Längsachse CC des Halteclipses 10 ausgerichtet. Die Zugangsöffnung 16 könnte sich jedoch auch in Richtung der Längsachse C-C erstrecken oder sie könnte unter jedem beliebigen Winkel zur Längsachse C-C verlaufen. Das Kopfteil 13 ist im Bereich des Schenkels 18 über einen Zapfenabschnitt 19 an eine Seite des benachbarten Auflagekragens 12 angeschlossen. Der Auflagekragen 12, der eine kreisförmige oder nicht kreisförmige Außenform aufweist, verläuft etwa rechtwinkelig zur Längsachse C-C. An die dem Kopfteil 13 abgewandte Seite des Auflagekragens 12 schließt sich der Fußabschnitt 11 an, der zum leichteren Einführen in eine Öffnung 20 des Karosserieteils 6 eine konische Außenform und zumindest zwei federnde aufspreizbare Arme 21 umfasst.

Das langgestreckte Zugelement 14 ist vom Fußabschnitt 11 des Halteclipses 10 weggeführt und weist eine endseitige Handhabe 22 auf. Die Handhabe 22 ist zum leichteren Einführen mit einem zugespitzten Ende 23 versehen. Benachbart der Handhabe 23 ist am Zugelement 14 eine aus zwei V-förmig angeordneten Haken 24 gebildete Verliersicherung 25 vorgesehen, mittels der das Zugelement 14 in der Vormontageposition A unverlierbar mit dem Karosserieteil 6 verbunden ist.

Das Zugelement 14 ist nach erfolgter Endmontage des Halteclipses 10 als Kabelbinder 26 nutzbar. Das Zugelement 14 ist nach erfolgter Endmontage des Halteclipses 10 entweder von diesem abtrennbar oder aber es verbleibt am Halteclip 10. Das Zugelement 14 weist entlang seiner Längserstreckung mehrere mit Abstand zueinander angeordnete Rastelemente 27 auf, wobei sich zwischen jeweils zwei benachbarten Rastelementen 27 jeweils ein zylindrischer Verbindungssteg 28 erstreckt. Die Rastelemente 27 sind im Ausführungsbeispiel kugel- bzw. kalottenförmig ausgebildet. Ferner weist das Zugelement 14 zumindest an einem Endbereich eine schlüssellochartige Aussparung 29 auf, die mit einem der Rastelemente 27 bzw. dem dazwischenliegenden Verbindungssteg 28 zusammenwirkt.

Die Festlegung des Bauteils 8 am Türinnenblech erfolgt folgendermaßen: Gemäß Fig. 4a erfolgt bei nicht montiertem Türinnenblech (Stellung D) eine Vormontage des Halteclipses 10 am Bauteil 8 dadurch, dass das Bauteil 8 durch die Zugangsöffnung 16 in den Aufnahmeabschnitt 15 eingesetzt wird, wobei die beiden Schenkel 17, 18 das Bauteil in eingesetzter Stellung umgreifen. Danach wird das zugespitzte Ende 23 der Handhabe 22 durch die Öffnung 20 des noch nicht montierten Türinnenblechs hindurchgesteckt.
Fig. 4b zeigt diese "Vormontagestellung A". Die beiden federnden V-förmig angeordneten Haken 24 ermöglichen ein Einfädeln und Hindurchführen des Zugelementes 14 von innen nach außen durch die Öffnung 20 des Türinnenblechs. Sie verhindern jedoch durch Aufspreizen, dass sich das Zugelement 14 ungewollt vom Türinnenblech lösen kann.

Anschließend wird das Türinnenblech lagerichtig an den Türkörper 2 herangeführt und randseitig an diesen befestigt (s. Fig. 4c - Stellung E). In weiterer Folge wird durch Ziehen des Zugelementes 14 in Richtung Fahrgastraum 4 (Pfeilrichtung R) der Fußabschnitt 11 des Halteclipses 10 über Zwischenstellungen zum Türinnenblech hin verlagert, bis er über eine nicht näher dargestellte Clipsverbindung am Türinnenblech in Lage gehalten ist.
Fig. 4d kennzeichnet diese "Endmontageposition B" des Halteclipses 10.

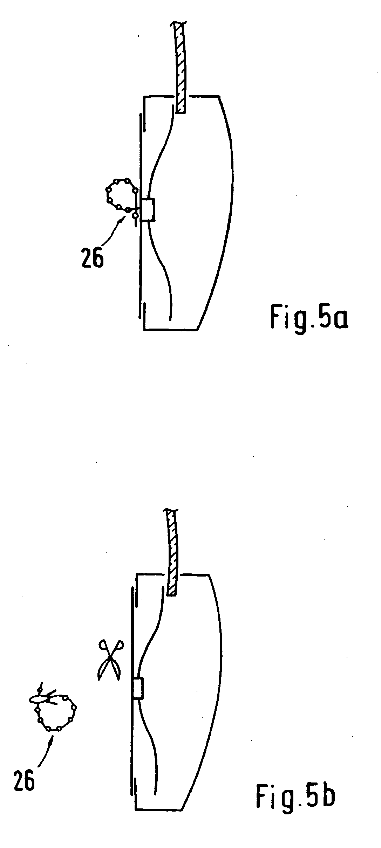

Danach steht das Zugelement 14 um ein Maß F gegenüber dem Türinnenblech in Richtung Fahrgastraum 4 vor. Durch die Anordnung von Rastelementen 27, dazwischenliegenden zylindrischen Verbindungsstegen 28 und zumindest eine schlüssellochartige Aussparung 29 kann das vorstehende Zugelement 14 als Kabelbinder 26 genutzt werden. Gemäß Fig. 5a verbleibt das Zugelement 14 am Halteclip 10, wogegen es gem. Fig. 5b mechanisch vom Halteclip 10 getrennt wurde und an anderer Stelle des Fahrzeuges als Kabelbinder 26 verwendbar ist.

## Patentansprüche

1. Halteclip (10) für Kraftfahrzeugkarosserien, der einen Fußabschnitt (11) und ein Kopfteil (13) umfasst, wobei das Kopfteil (13) einen Aufnahmeabschnitt (15) für zumindest ein festzulegendes Bauteil (8) aufweist und der Fußabschnitt (11) in einer Endmontageposition in eine Öffnung eines Karosserieteils (6) einsteckbar und daran befestigbar ist, wobei der am festzulegenden Bauteil (8) vormontierbare Halteclip (10) ein Zugelement (14) aufweist, mittels dem der Halteclip (10) von einer Vormontageposition (A) über Zwischenstellungen in die Endmontageposition (B) verlagerbar ist, wobei das vom Fußabschnitt (11) weggeführte Zugelement (14) eine endseitige Handhabe (22) aufweist, **dadurch gekennzeichnet, dass** das Zugelement (14) nach erfolgter Endmontage des Halteclipses (10) am Karosserieteil (6) als Kabelbinder (26) nutzbar ist.

2. Halteclip nach Anspruch 1, **dadurch gekennzeichnet, dass** am Zugelement (14) entlang seiner Längserstreckung mehrere mit Abstand zueinander angeordnete Rastelemente (27) und dazwischenliegend angeordnete Verbindungsstege (28) ausgebildet sind, wobei die Rastelemente (27) bzw. die dazwischenliegenden Verbindungsstege (28) mit zumindest einer korrespondierenden Aussparung (29) des Zugelementes (14) zusammenwirken.

3. Halteclip nach Anspruch 1, **dadurch gekennzeichnet, dass** die Handhabe (22) des Zugelementes (14) mit einem zugespitzten Ende (23) versehen ist.

4. Halteclip nach einem der vorangegangenen Ansprüchen, **dadurch gekennzeichnet, dass** benachbart der Handhabe (22) am Zugelement (14) eine aus zwei V-förmig angeordneten Haken (24) gebildete Verliersicherung (25) vorgesehen ist, mittels der das Zugelement (14) in der Vormontageposition (A) mit dem Karosserieteil (6) verbindbar ist.

5. Halteclip nach Anspruch 1, **dadurch gekennzeichnet, dass** das Zugelement (14) nach erfolgter Endmontage des Halteclips (10) von diesem abtrennbar ist.

6. Halteclip nach Anspruch 1, **dadurch gekennzeichnet, dass** das Zugelement (14) nach erfolgter Endmontage des Halteclipses (10) an diesem verbleiben kann.

## Claims

1. Retaining clip (10) for motor vehicle bodies, which retaining clip comprises a foot section (11) and a head part (13), wherein the head part (13) has a receiving section (15) for at least one component (8) which is to be secured, and, in a final assembly position, the foot section (11) can be inserted into an opening in a body part (6) and can be fastened thereto, wherein the retaining clip (10) which can be preassembled on the component (8) which is to be secured has a tensioning element (14) by means of which the retaining clip (10) can be displaced from a preassembly position (A) via intermediate positions into the final assembly position (B), and wherein the tensioning element (14) which is guided away from the foot section (11) has a handle (22) on the end side, **characterized in that**, after the retaining clip (10) has been finally assembled on the body part (6), the tensioning element (14) can be used as a cable tie (26).

2. Retaining clip according to Claim 1, **characterized in that** a plurality of latching elements (27) arranged at a distance from one another and connecting webs (28) arranged lying in between are formed along the longitudinal extent of the tensioning element (14), the latching elements (27) and the connecting webs (28) which lie in between interacting with at least one corresponding cutout (29) of the tensioning element (14) .

3. Retaining clip according to Claim 1, **characterized in that** the handle (22) of the tensioning element (14) is provided with a pointed end (23).

4. Retaining clip according to one of the preceding claims, **characterized in that** a means of securing against loss (25) is provided on the tensioning element (14) adjacent to the handle (22), said means of securing against loss being formed from two hooks (24) arranged in a V-shaped manner and being usable to connect the tensioning element (14) to the body part (6) in the preassembly position (A).

5. Retaining clip according to Claim 1, **characterized in that**, after the retaining clip (10) has been finally assembled, the tensioning element (14) can be removed therefrom.

6. Retaining clip according to Claim 1, **characterized in that**, after the retaining clip (10) has been finally assembled, the tensioning element (14) can remain thereon.

## Revendications

1. Attache de retenue (10) pour carrosseries de véhicules automobiles, qui comprend une portion de base (11) et une partie de tête (13), la partie de tête (13) présentant une portion de réception (15) pour au moins un composant (8) à fixer, et la portion de base (11) pouvant être enfoncée dans une position de montage finale dans une ouverture d'une partie de la carrosserie (6) et pouvant y être fixée, l'attache de retenue (10) pouvant être prémontée sur le composant à fixer (8) présentant un élément de traction (14), au moyen duquel l'attache de retenue (10) peut être déplacée d'une position de prémontage (A), en passant par des positions intermédiaires, dans la position de montage finale (B), l'élément de traction (14) guidé à l'écart de la portion de base (11) présentant une manette (22) à l'extrémité, **caractérisée en ce que** l'élément de traction (14) peut être utilisé comme connexion de câble (26) après le montage final de l'attache de retenue (10) à la partie de la carrosserie (6).

2. Attache de retenue selon la revendication 1, **caractérisée en ce que** l'on prévoit sur l'élément de traction (14) le long de son étendue longitudinale, plusieurs éléments d'encliquetage (27) disposés à distance les uns des autres et des nervures de connexion (28) disposées entre eux, les éléments d'encliquetage (27) ou les nervures de connexion (28) disposées entre eux coopérant avec au moins un évidement correspondant (29) de l'élément de traction (14).

3. Attache de retenue selon la revendication 1, **caractérisée en ce que** la manette (22) de l'élément de traction (14) est pourvue d'une extrémité pointue (23).

4. Attache de retenue selon l'une quelconque des revendications précédentes, **caractérisée en ce que** l'on prévoit à côté de la manette (22), sur l'élément de traction (14), une fixation imperdable (25) formée de deux crochets (24) disposés en forme de V, au moyen de laquelle l'élément de traction (14) peut être connecté dans la position de prémontage (A) à la partie de la carrosserie (6).

5. Attache de retenue selon la revendication 1, **caractérisée en ce que** l'élément de traction (14) peut être séparé de l'attache de retenue (10) après son montage final.

6. Attache de retenue selon la revendication 1, **caractérisée en ce que** l'élément de traction (14) peut rester sur l'attache de retenue (10) après son montage final.
